# EUROPÄISCHE PATENTSCHRIFT

(11) **EP 2 807 570 B1**
(45) Veröffentlichungstag und Bekanntmachung des Hinweises auf die Patenterteilung: **08.02.2017**
(21) Anmeldenummer: 12798181.9
(22) Anmeldetag: 13.11.2012
(51) Int. Cl.: G06F 13/42, H04L 12/40

(54) **SENSORÜBERTRAGUNGSVORRICHTUNG UND VERFAHREN ZUR ÜBERTRAGUNG VON NUTZDATEN VON EINER MEHRZAHL VON SENSOREN AN EINE BUSSTEUERVORRICHTUNG FÜR EIN FAHRZEUG**
SENSOR TRANSMISSION DEVICE AND METHOD FOR TRANSMITTING PAYLOAD DATA FROM A PLURALITY OF SENSORS TO A BUS CONTROL DEVICE FOR A VEHICLE
DISPOSITIF DE TRANSMISSION DE DONNÉES DE CAPTEURS ET PROCÉDÉ DE TRANSMISSION DE DONNÉES UTILES D'UNE PLURALITÉ DE CAPTEURS À UN DISPOSITIF DE COMMANDE DE BUS POUR UN VÉHICULE

(30) Priorität: 01.12.2011 DE 102011087509
(43) Veröffentlichungstag der Anmeldung: 03.12.2014
(73) Patentinhaber: Robert Bosch GmbH, 70442 Stuttgart (DE)
(72) Erfinder: BOECK, Heiko, 71277 Rutesheim (DE); HELMLE, Michael, 73732 Esslingen (DE)
(86) Internationale Anmeldenummer: PCT/EP2012/072474
(87) Internationale Veröffentlichungsnummer: WO 2013/079315

(56) Entgegenhaltungen:
- EP-A2- 1 298 849
- EP-A2- 1 439 670
- DE-A1-102009 027 201
- LIN CONSORTIUM: "LIN Specification Package. Revision 2.0", INTERNET CITATION, 23. September 2003 (2003-09-23), Seite 125pp, XP007910142, Gefunden im Internet: URL:http://www7.informatik.uni-erlangen.de /~dulz/fkom/06/Material/3/LIN%20Specificat ion%20Package.pdf [gefunden am 2009-10-14]

## Beschreibung

### Stand der Technik

Die vorliegende Erfindung bezieht sich auf eine Sensorübertragungsvorrichtung und ein Verfahren zur Übertragung von Nutzdaten von einer Mehrzahl von Sensoren an eine Bussteuervorrichtung für ein Fahrzeug sowie auf ein entsprechendes Computerprogrammprodukt gemäß den Hauptansprüchen.

In Fahrzeugen kommt anstelle von proprietären Punkt-zu-Punkt-Verbindungen zwischen Sensoren und zentralen Auswerteeinheiten immer mehr "Bus-Lösungen" zum Einsatz. Hierbei wird üblicherweise die Verwendung des LIN-Busses (LIN = Local Interconnect Network) als standardisiertes und kostenoptimiertes Bussystem in Fahrzeugen zum Einsatz.

Beim Standard LIN-Protokoll sendet ein Teilnehmer seine Daten jeweils in einem dedizierten Frame. Durch die für ein Frame notwendigen Steuerdaten kommt es zu einer drastischen Verschlechterung der Nettodatenübertragungsrate, wenn durch einen einzelnen Teilnehmer nur eine geringe Datenmenge gesendet wird. Nach dem Stand der Technik (LIN-Spezifikation) sieht das LIN-Protokoll vor, dass jeder Teilnehmer seine Daten mittels einem oder mehreren dedizierten Frames, gekennzeichnet durch eine Frame-ID, überträgt.

In DE 10 2009 027 201 A1 ist ein Verfahren beschrieben, nach dem sich mehrere Teilnehmer ein Frame teilen mit dem Ziel die insgesamt notwendigen Steuerdaten zu reduzieren. Die Position, an der jeder Teilnehmer seine Daten innerhalb des gemeinsamen Frames schreibt, ist durch dessen eindeutige Kennung festgelegt. Die Position der Daten ist damit statisch festgelegt. Damit ein valides Frame entsteht, müssen alle Sensoren senden. Das Protokoll ist für den Fall optimiert, in dem alle Teilnehmer in jedem Zyklus neue Daten zu senden haben. Dann ist die Nettodatenrate am höchsten. Die Nettodatenrate sinkt allerdings, wenn einzelne Teilnehmer in einem Zyklus keine neuen Daten zu senden haben. Dann müssen diese "Leerbytes" senden, wodurch unnötig Bandbreite belegt wird, bzw. die Zykluszeit unnötig lang ist. Der in der vorstehend genannten Druckschrift genannte Ansatz wird auch als "VLINC" bezeichnet und unter dieser Bezeichnung im weiteren Verlauf der Beschreibung auch genannt.

### Offenbarung der Erfindung

Vor diesem Hintergrund werden mit der vorliegenden Erfindung ein Verfahren zum Zuordnen von Nutzdaten aus einem Busdatenpaket zu verschiedenen Sensorübertragungsvorrichtungen, eine Bussteuervorrichtung, die dieses Verfahren verwenden, ein Verfahren zur Übertragung von Nutzdaten von einer Mehrzahl von Sensoren an eine Bussteuervorrichtung für ein Fahrzeug, weiterhin eine Sensorübertragungsvorrichtung, die dieses Verfahren verwenden sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung basiert auf der Erkenntnis, dass das Datenformat eines bereits vorhandenen Datenbusses für die Übertragung von Nutzdaten einer Mehrzahl von Sensoren an eine zentrale Auswerteeinheit bzw. Bussteuereinheit zum Zuordnen der zu übertragenden Daten effizient verwendet bzw. verändert werden kann. Hierbei braucht nicht für jeden Sensor ein gesamtes Busdatenpaket aufgewandt werden, sondern mehrere Sensoren bzw. deren Übertragungseinheiten können zu einer "virtuellen Einheit" zusammengeschaltet werden. Hierdurch können die von mehreren Sensoren stammenden Nutzdaten in das Nutzdatenfeld eines einzigen Busdatenpakets integriert werden. Auf diese Weise reduziert sich der Signalisierungsaufwand, und somit Signal-Mehraufwand ("Overhead"), da nun mit einem Busdatenpaket eine größere Menge von Nutzdaten übertragen werden kann. Um eine solche Datenübertragung von mehreren Sensoren an die Auswerteeinheit bzw. die Bussteuereinheit fehlerfrei durchführen zu können, sollte in dem Signalisierungsfeld eines solchen Busdatenpakets eine vorbestimmte Signalisierungsinformation bzw. vorbestimmte Signalisierungsdaten aus einer Menge von unterschiedlichen Signalisierungsdaten angeordnet werden, die den Sensorübertragungsvorrichtungen anzeigen, dass nun ein Busdatenpaket über den Datenbus übertragen wird, welches durch die Bussteuervorrichtung entsprechend einer vorbestimmten Zuordnungsvorschrift der Nutzdatenblöcke in dem Nutzdatenfeld zu den jeweiligen Sensorübertragungsvorrichtungen ausgewertet wird. Durch den hier vorgestellten Ansatz lassen sich gegenüber vorbekannten Verfahren die über den Datenbus gesendeten Busdatenpakete für den Fall verkürzen, dass nicht alle angeschlossenen Sensorübertragungsvorrichtungen zu jedem Busdatenpaket Nutzdaten beizutragen haben. Über eine Zuordnungsvorschrift sind allen am Datenbus angeschlossenen Einrichtungen die Länge und die Anordnung der Nutzdatenblöcke innerhalb der Busdatenpakete bekannt.

Die vorliegende Erfindung schafft ein Verfahren zum Zuordnen von Nutzdaten aus einem Busdatenpaket zu verschiedenen Sensorübertragungsvorrichtungen, wobei eine Bussteuervorrichtung mit einem Datenbus eines Fahrzeugs verbunden ist, der zur gleichzeitigen Übertragung von Busdatenpaketen zwischen einer Mehrzahl von Sensorübertragungsvorrichtungen und der Bussteuervorrichtung ausgebildet ist, wobei die Busdatenpakete zumindest ein Signalisierungsfeld und ein Nutzdatenfeld mit zumindest zwei Nutzdatenblöcken umfassen und wobei das Verfahren die folgenden Schritte aufweist:

### Einlesen eines Busdatenpakets;

Bestimmen einer Zuordnungsvorschrift auf Basis einer Aktionsliste, wobei die Aktionsliste mehrere Kombinationen von je einem von mehreren möglichen Betriebszuständen für jede den Datenbus nutzende Sensorübertragungsvorrichtung enthält, wobei die Zuordnungsvorschrift einen Zusammenhang zwischen eine Länge des Nutzdatenfeldes und dem aktuellen Betriebszustand jeder der Sensorübertragungsvorrichtungen repräsentiert; und
Interpretieren der Nutzdaten des Busdatenpakets und Zuordnen der ausgelesenen Nutzdaten zu den verschiedenen Sensorübertragungsvorrichtungen, wobei im Schritt des Interpretierens und Zuordnens berücksichtigt wird, dass das Nutzdatenfeld für unterschiedliche Kombinationen der Betriebszustände der Sensorübertragungsvorrichtungen entsprechend der Zuordnungsvorschrift das Busdatenpaket eine unterschiedliche Länge aufweist.

Bei dem Fahrzeug kann es sich um ein Kraftfahrzeug, beispielsweise einen Personenkraftwagen, einen Lastkraftwagen oder ein sonstiges Nutzfahrzeug handeln. Unter einer Sensorübertragungsvorrichtung kann eine Einrichtung verstanden werden, die Sensor-Signale von einem Sensor aufnimmt und diese an einen Datenbus weiterleitet. Dabei repräsentieren die Sensor-Signale eine physikalische Größe, die der Sensor erfasst. Die Sensorübertragungsvorrichtung kann beispielsweise entsprechende Nutzdaten aus den Sensor-Signalen extrahieren und die Nutzdaten entsprechend weiterer Vorschriften auf dem Datenbus zur Verfügung stellen. Bei dem Datenbus kann es sich beispielsweise um einen LIN-Bus handeln, wobei auch ein anderer Datenbus denkbar ist. Über den Datenbus können beispielsweise Busdatenpakete entsprechend einer festgelegten Definition oder Spezifikation übertragen werden. Der Datenbus kann beispielsweise als serieller Bus ausgebildet sein. Die Busdatenpakete können aus einem Signalisierungsfeld, auch als "Header", "Frame-ID" oder Signalisierungs-ID bezeichnet, einem Nutzdatenfeld und weiteren optionalen Merkmalen zusammengesetzt sein. Unter einer Aktionsliste kann eine Liste verstanden werden, die mehrere Kombinationen von je einem von mehreren Betriebsmodi bzw. -zuständen für alle Sensorübertragungsvorrichtungen und für die Bussteuervorrichtung enthält. Damit können alle Sensorübertragungsvorrichtungen im Netzwerk bestimmen, welche Sensorübertragungsvorrichtungen etwas senden werden und können entsprechend die Position für den eigenen Nutzdatenblock im Nutzdatenfeld bestimmen. Die Bestimmung der Position für die einzelnen Nutzdatenblöcke in einem Busdatenpaket kann als Zuordnungsvorschrift verstanden werden.

Auch schafft die vorliegende Erfindung ein Verfahren zur Übertragung von Nutzdaten von einer Sensorübertragungsvorrichtung zu einer Bussteuervorrichtung unter Verwendung eines Datenbusses, der zur gleichzeitigen Übertragung von Busdatenpaketen zwischen einer Mehrzahl von Sensorübertragungsvorrichtungen und der Bussteuervorrichtung ausgebildet ist, wobei die Busdatenpakete zumindest ein Signalisierungsfeld und ein Nutzdatenfeld mit zumindest einem Nutzdatenblock umfassen und wobei das Verfahren folgende Schritte aufweist: Beziehen von Nutzdaten von einem Sensor, wobei die Nutzdaten eine von dem Sensor gemessene physikalische Größe repräsentieren;
Ermitteln einer Zuordnungsvorschrift auf Basis einer Aktionsliste, wobei die Aktionsliste mehrere Kombinationen von je einem von mehreren möglichen Betriebszuständen für jede den Datenbus nutzende Sensorübertragungsvorrichtung enthält und wobei in Abhängigkeit von der Zuordnungsvorschrift und einem aktuellen Betriebszustand der Sensorübertragungsvorrichtung eine von mehreren unterschiedlichen Längen und/oder eine von mehreren unterschiedlichen Positionen des Nutzdatenblocks im Nutzdatenfeld ermittelt wird; und
Empfangen von vorbestimmten Signalisierungsdaten in dem Signalisierungsfeld des Busdatenpaketes und hierauf ansprechendes Anordnen zumindest eines Teils der empfangenen Nutzdaten in dem zumindest einen durch die Zuordnungsvorschrift spezifizierten Nutzdatenblock für die Sensorübertragungsvorrichtung.

Ferner wird vorliegend eine Sensorübertragungsvorrichtung oder Bussteuervorrichtung vorgestellt, die ausgebildet sein kann, um die Schritte der vorstehend genannten Verfahren oder einer Variante davon in entsprechenden Einrichtungen durchzuführen bzw. umzusetzen. Auch durch diese Ausführungsvariante der Erfindung in Form einer Sensorübertragungsvorrichtung oder einer Bussteuervorrichtung kann die der Erfindung zugrunde liegende Aufgabe schnell und effizient gelöst werden.

Unter einer Sensorübertragungsvorrichtung oder einer Bussteuervorrichtung kann vorliegend ein elektrisches Gerät verstanden werden, das Sensorsignale verarbeitet und in Abhängigkeit davon Steuersignale ausgibt. Die Sensorübertragungsvorrichtung und/oder die Bussteuervorrichtung kann zumindest eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen eines Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder der Sensorübertragungsvorrichtung oder der Bussteuervorrichtung ausgeführt wird.

Die vorliegende Erfindung bietet den Vorteil, dass die Nettodatenübertragungsrate in einem Netzwerk mit einer Mehrzahl an Sensorübertragungseinrichtungen, die jeweils nur geringe Datenmengen senden und nicht in jedem Zyklus Daten zu senden haben, verbessert, d. h. erhöht, wird. Wenn nur geringe Datenmengen je Sensorübertragungsvorrichtung zu senden sind, erreichen die Steuerdaten einen hohen Anteil an der Gesamtdatenrate. In vorbekannten Lösungen wurde bereits dieses Problem adressiert, wobei aber in einem System mit Sensorübertragungseinheiten, die nicht in jedem Zyklus Daten zu senden haben, viele Leerbytes, oder bereits früher gesendete Daten übertragen werden sollten, um ein gültiges Busdatenpaket zu erzeugen. An dieser Stelle setzt das vorliegend vorgestellte Verfahren an und erhöht die Nettodatenübertragungsrate, da es nicht erforderlich ist, Leerbytes zu übertragen.

In einer günstigen Ausführungsform der vorliegenden Erfindung kann im Schritt des Bestimmens oder im Schritt des Ermittelns die Anordnung einer Mehrzahl von Nachrichtenblöcken in einem Nachrichtenfeld in Kenntnis vom aktuellen Betriebszustand aller den Datenbus nutzenden Sensorübertragungsvorrichtungen ermittelt werden. Wenn beispielsweise ein Betriebszustand einer Sensorübertragungseinheit für das Bussteuergerät eine höhere Priorität hat, so könnte der entsprechende Nutzdatenblock weiter vorne in einem Busdatenpaket angeordnet sein. Oder die Nutzdatenblöcke können in einer, gedachten, aufsteigenden Reihenfolge angeordnet sein, wobei die Sensorübertragungsvorrichtungen, welche aktuell keine Daten zu senden haben, nicht berücksichtigt werden.

Auch kann in einer weiteren Ausführungsform in einem Schritt des Initialisierens die Aktionsliste ausgesandt und/oder empfangen und/oder aktualisiert werden.

Dies ist von Vorteil, wenn während des Betriebes von der Bussteuervorrichtung oder einem übergeordneten System die Aktionsliste ausgetauscht werden kann, um auf eine neue Betriebssituation zu reagieren. Auch kann so Speicher für die Aktionsliste gespart werden, da beispielsweise nur der aktuell relevante Teil einer größeren Aktionsliste allen Busteilnehmern zu einem Moment zur Verfügung stehen sollte.

Ferner kann gemäß einer Ausführungsform der vorliegenden Erfindung im Schritt des Bestimmens oder Ermittelns die Zuordnungsvorschrift auf Basis einer Aktionsliste unter Verwendung der von der Bussteuervorrichtung in das Signalisierungsfeld eines Busdatenpakets geschriebenen Signalisierungsdaten bestimmt werden. Es kann von Vorteil sein, dass kein zusätzlicher Auswahlbefehl erforderlich ist, was die Nettodatenübertragungsrate verringern würde.

Günstigerweise erfolgt bei einer Ausführungsform der vorliegenden Erfindung im Schritt des Ermittelns die Ausführung einer aus der Aktionsliste ausgewählten Aktion in der Sensorübertragungsvorrichtung anhand der von der Bussteuervorrichtung in das Signalisierungsfeld eines Busdatenpakets geschriebenen Signalisierungsdaten. Dies erübrigt einen zusätzlich zu sendenden Auswahlbefehl und erhöht letztendlich die Nettodatenübertragungsrate.

Gemäß einer weiteren Ausführungsform der vorliegenden Erfindung kann in einem Schritt des Sendens ein Auswahlbefehl von der Bussteuervorrichtung an eine erste und eine zumindest zweite Sensorübertragungsvorrichtung gesendet werden, wobei der Auswahlbefehl die Ausführung einer aus der Aktionsliste ausgewählten ersten Aktion in der ersten Sensorübertragungsvorrichtung und einer aus der Aktionsliste ausgewählten zweiten Aktion in der zumindest zweiten Sensorübertragungsvorrichtung bewirkt. Hierdurch können mit einem Auswahlbefehl eine Mehrzahl oder alle Sensorübertragungsvorrichtungen abgefragt werden, beziehungsweise der Betriebszustand einer Mehrzahl oder aller Sensorübertragungsvorrichtungen beeinflusst werden.

Die Erfindung wird nachstehend anhand der beigefügten Zeichnungen beispielhaft näher erläutert. Es zeigen:
- Fig. 1a-d: Darstellung eines Aufbaus von Datenpaketen bei einer herkömmlichen Datenübertragung gegenüber dem Aufbau eines Datenpakets auf dem Datenbus gemäß VLINC-Protokoll und gemäß einem ersten Ausführungsbeispiel der der vorliegenden Erfindung;
- Fig. 2: ein Blockschaltbild eines Datenübertragungssystems unter Verwendung eines Ausführungsbeispiels der erfindungsgemäßen Sensorübertragungsvorrichtung und eines Ausführungsbeispiels der erfindungsgemäßen Bussteuervorrichtung;
- Fig. 4: ein Ablaufdiagramm eines Ausführungsbeispiels der vorliegenden Erfindung als Verfahren; und
- Fig. 5: ein Ablaufdiagramm eines weiteren Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Die nachfolgend beschriebenen Ausführungsbeispiele werden unter Verwendung eines LIN-Busses als Datenbus erläutert, wobei auch andere Bussysteme in Fahrzeugen als Datenbus entsprechend dem erfindungsgemäßen Ansatz verwendbar sind.

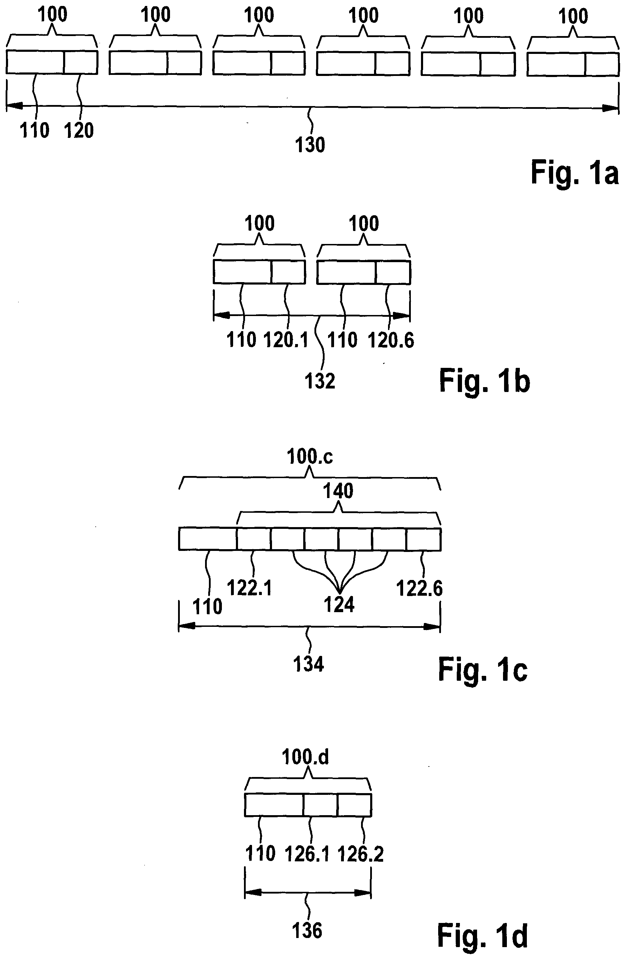

Die Darstellungen in Fig. 1a, 1b, 1c und 1d zeigen einen Aufbau von Datenpaketen bei einer herkömmlichen Datenübertragung gegenüber dem Aufbau eines Datenpakets auf dem Datenbus gemäß VLINC-Protokoll und gemäß einem ersten Ausführungsbeispiel der vorliegenden Erfindung. Fig. 1a zeigt eine zeitliche Hintereinanderreihung von Busdatenpaketen 100, die über einen Datenbus übertragen werden, bei einer herkömmlichen Datenübertragung gemäß dem LIN-Protokoll. In einem ersten Ausführungsbeispiel wird davon ausgegangen, dass jeder Sensor 1 Byte, d. h. 8 Bit, übertragen möchte, wobei sechs Sensoren an den LIN-Bus angeschlossen sind. Für jeden der Sensoren ist ein einzelnes Busdatenpaket 100 vorzusehen. Ein Busdatenpaket 100 setzt sich aus Signalisierungsdaten 110, auch als Frame-ID 110 bezeichnet, und einem Nutzdatenblock 120 zusammen. Bis alle sechs Busdatenpakete 100 gemäß dem herkömmlichen Ansatz übertragen werden, verstreicht eine Übertragungszeit 130.

In einem ersten Teil (Signalisierung) werden für einen Sensor individuell vorbestimmte Signalisierungsdaten 110 übertragen, die von einem Master oder einer Bussteuervorrichtung auf den Datenbus gesendet werden und die eine Funktion bei dem jeweils angesprochenen Sensor bzw. der jeweils angesprochenen Sensorübertragungsvorrichtung auslösen. Diese ausgelöste Funktion kann darin bestehen, dass nach einem Empfang der entsprechenden Signalisierungsdaten die Nutzdaten der jeweiligen Sensoreinheit bereitgestellt werden. Diese Nutzdaten repräsentieren beispielsweise einen durch Ultraschall gemessenen Abstand des Fahrzeugs zu einem Objekt außerhalb des Fahrzeugs oder eine andere physikalische Größe. In einem an das Signalisierungsfeld 110 anschließenden Nutzdatenfeld können die vom Sensor gelieferten Nutzdaten in einen Nutzdatenblock 120 eingefügt und von der Sensorübertragungsvorrichtung über den Datenbus an die Bussteuervorrichtung gesendet werden. Das Nutzdatenfeld kann eine Mehrzahl von Nutzdatenblöcken 120 beinhalten.

Fig. 1a zeigt exemplarisch eine Übertragung nach dem LIN-Protokoll. Jeder Teilnehmer sendet seine Daten in einem separaten Frame. Das Verhältnis von Nutzdaten zu Steuerdaten wird bei geringer Nutzdatenmenge signifikant schlecht. Möchte in einem Netzwerk aus sechs Teilnehmern z. B. jeder Teilnehmer ein Byte senden, so sollten nach dem LIN-Standard Protokoll sechs einzelne Frames mit jeweils nur einem einzelnen Byte versendet werden. Dies würde eine Übertragungszeit von 23,64ms (6 * 3,94ms) bedeuten.

Fig. 1b zeigt nach dem Standard LIN-Protokoll eine Situation, in der in einem Zyklus nur zwei Teilnehmer oder Sensoren Daten senden. Es werden zwei Busdatenpakete 100 gesendet, wobei ein erstes Busdatenpaket 100 aus Signalisierungsfelddaten 110 und einem Nutzdatenblock 120.1 Nutzdaten eines ersten Sensors überträgt und ein zweites Busdatenpaket 100 aus Signalisierungsfelddaten 110 und einem Nutzdatenblock 120.6 Nutzdaten eines zweiten Sensors überträgt. Bis die beiden Busdatenpakete den gemäß dem herkömmlichen Ansatz übertragen werden, verstreicht eine Übertragungszeit 132.

Haben in einem Zyklus nur zwei Teilnehmer Daten zu senden, so können diese mit dem Standard LIN-Protokoll auch einzeln abgefragt werden. Bei Fortführung des in Fig. 1a gezeigten Beispiels ergibt sich zur Übertragung von Nutzdaten von zwei Sensoren eine Übertragungszeit 132 von 7,88ms.

Fig. 1c zeigt eine Erweiterung des Standard LIN-Protokolls. Ein Busdatenpaket 100.c setzt sich zusammen aus Signalisierungsdaten 110 und einem Nutzdatenfeld 140, wobei das Nutzdatenfeld 140 aus einer Mehrzahl an Nutzdatenblöcken 122.1, 122.6 und 124 zusammengesetzt ist. Für die Übertragung eines Busdatenpakets 100.c gemäß Fig. 1c verstreicht eine Übertragungszeit 134. Nach dem Standard LIN-Protokoll enthält ein Busdatenpaket 100 nur Nutzdaten eines Sensors. Eine Erweiterung gemäß dem VLINC-Protokoll erlaubt es, Nutzdaten von mehreren Sensoren in einem Nutzdatenfeld zusammenzuführen. Fig. 1c zeigt analog zu Fig. 1a die Übertragung von Nutzdaten von sechs Sensoren. Wenn analog zu Fig. 1b nur zwei Sensoren Nutzdaten zu übertragen haben, so sollten die anderen Sensoren anstelle von Nutzdaten Leerbytes 124 senden. Entsprechend enthält das Nutzdatenfeld 140 zwei mit Nutzdaten gefüllte Nutzdatenblöcke 122.1 und 122.6 sowie mit Leerbytes gefüllte Nutzdatenblöcke 124.

Beim VLINC-Protokoll schreiben alle sechs Teilnehmer ihr Byte in ein gemeinsames Frame. So beträgt die Übertragungszeit nur noch 7,58ms. Dieses Verfahren setzt voraus, dass alle Teilnehmer eine eindeutige ID besitzen. Anhand dieser ID wird die Position der Datenbytes im gemeinsamen Frame bestimmt. Die Position der Daten ist damit statisch festgelegt.

Fig. 1c zeigt eine Anordnung der Daten nach dem VLINC-Protokoll. Alle sechs Teilnehmer sollen ein Datenpaket (z. B. ein Byte), d. h. ein Nutzdatenblock 122.1, 122.6, 124 senden. Haben sie keine neuen Daten zu übertragen, werden stattdessen Leerbytes 124 übertragen.

Fig. 1d zeigt eine erfindungsgemäße Übertragung von Nutzdaten über einen Datenbus, wobei an den Datenbus in diesem erfindungsgemäßen Beispiel sechs Sensoren angeschlossen sind, wobei aktuell nur zwei Sensoren Nutzdaten zu übertragen haben. Ein Busdatenpaket 100 setzt sich zusammen aus Signalisierungsdaten 110 und zwei Nutzdatenblöcken 126.1 und 126.2, wobei der Nutzdatenblock 126.1 Nutzdaten eines ersten Sensors enthält und der Nutzdatenblock 126.2 Nutzdaten eines zweiten Sensors enthält. Für die Übertragung des Busdatenpakets 100.d verstreicht eine Übertragungszeit 136.

Eine erste Ausprägung der Erfindung setzt voraus, dass alle Teilnehmer wissen, wann welche Teilnehmer Daten senden wollen. Bei dieser Erfindung wird allen Teilnehmern eine globale Aktionsliste gesendet. Somit verfügt jeder Teilnehmer nicht nur über die Information seiner eigenen Aktionen, sondern auch über die aller anderen Teilnehmer im Netzwerk. Damit wissen alle Teilnehmer, wann welcher Teilnehmer etwas senden möchte, und können entsprechend ihre Position der Daten innerhalb des Frames beziehungsweise ihre Nutzdatengröße, auch bezeichnet als "Payload"-Größe, dynamisch bestimmen. Bei dieser Vorgehensweise ist die Frame-ID 110 nicht von Bedeutung. Dieses Verfahren funktioniert insbesondere auch dann noch, wenn die globale Aktionsliste während des Betriebs aktualisiert wird.

In einem Ausführungsbeispiel wird davon ausgegangen, dass an einem Datenbus sechs Sensoren angeschlossen sind, und dass jeder der Sensoren jeweils Nutzdaten in Größe von einem Byte zu übertragen hat. Es wird angenommen, dass nur zwei der sechs Teilnehmer ein Byte senden wollen, so kann mit dieser Erfindung eine Übertragungszeit von 4,67ms (statt 7,58ms nach dem VLINC-Protokoll gemäß Fig. 1c, oder statt 7,88ms nach dem Standard LIN-Protokoll gemäß Fig. 1 b) erreicht werden. Eine weitere Ausprägung sieht vor, dass die Teilnehmer anhand der Frame-ID 110 wissen, an welche Byte-Position sie ihre Daten schreiben sollen. Somit sollten die Teilnehmer nicht über die Aktionen der anderen Teilnehmer Bescheid wissen.

Angenommen in einem Zyklus haben tatsächlich nur zwei von sechs Teilnehmern Daten zu senden. Nach dem Standard LIN-Protokoll würden diese mit jeweils einem Frame, wie in Fig. 1b dargestellt, abgefragt werden. Beim Standard VLINC-Protokoll würden sich die Frames wie in Fig. 1c zusammensetzen. Eine dynamische Anordnung der Daten entsprechend dieser Ausprägung der Erfindung ist in Fig. 1d dargestellt.

Fig. 1d zeigt eine erfindungsgemäße Anordnung der Daten. Es senden nur noch die Teilnehmer, die tatsächlich Daten zu übertragen haben. Damit Teilnehmer 6 seine Daten nicht an Position 6 (wie in Fig. 1c) sendet, sondern an Position 2, kann er aus den Informationen der Aktionsliste errechnen oder anhand der Frame-ID 110 bestimmen.

Die Nachweisbarkeit erfolgt durch eine Analyse auf dem "Physical Layer" (z. B. mit Oszilloskop). Beim VLINC-Protokoll ist zu erkennen, dass alle Teilnehmer in statischer Weise zu einem Frame Daten beitragen. Beim erfindungsgemäßen Verfahren ist auf der Bitübertragungsschicht (engl. Physical Layer) zu sehen, dass sich die Frames dynamisch zusammensetzen. Es senden also nicht stets alle Teilnehmer.

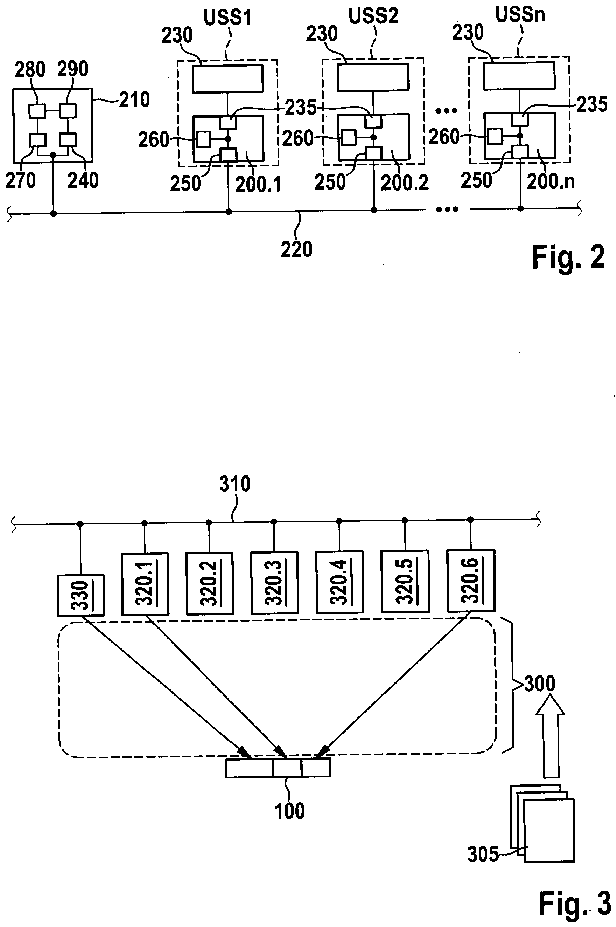

Figur 2 zeigt ein Blockschaltbild einer Verbindung von Ausführungsbeispielen von Sensorübertragungsvorrichtungen 200.1, 200.2, ..., 200.n mit einem Ausführungsbeispiel einer Bussteuervorrichtung 210 über einen Datenbus 220. Die Sensorübertragungsvorrichtungen 200.1, 200.2, ..., 200.n können dabei mit jeweils einem Sensor 230 zu je einer Sensoreinheit USS1, USS2, ... USSn verbunden sein, wobei die Sensoren 230 der Sensorübertragungsvorrichtung 200 Daten über eine Sensorschnittstelle 235 bereitstellen. Diese Daten repräsentieren eine physikalische Größe. Beispielsweise kann die physikalische Größe ein ultraschallbasiertes Abstandssignal zu einem Objekt außerhalb des Fahrzeugs sein, wenn der Sensor 230 als Einparkhilfe verwendet wird. Die Bussteuervorrichtung 210 kann dabei zur Steuerung der Datenübertragung über den Datenbus 220 und zur Auswertung der Nutzdaten aus dem Nutzdatenfeld eines Busdatenpakets100 ausgebildet sein.

Die Bussteuervorrichtung 210 weist eine Sendeeinheit 240 auf, die zu einem bestimmten Zeitpunkt vorbestimmte Signalisierungsdaten in dem Signalisierungsfeld eines Busdatenpakets 100 angeordnet und diese Signalisierungsdaten über den Datenbus 220 sendet. Diese Signalisierungsdaten können über eine Busschnittstelle 250 in jeder Sensorübertragungsvorrichtung 200 von dem Datenbus 220 ausgelesen und interpretiert werden. Werden von den Sensorübertragungseinheiten 200.1, 200.2, ..., 200.n die vorbestimmten Signalisierungsdaten auf dem Datenbus 220 erkannt, die eine Datenübertragung von Nutzdaten der Sensoren 230 der verschiedenen Sensoreinheiten USS1, USS2, ... USSn initialisiert, kann jede der Sensorübertragungsvorrichtungen 200.1, 200.2, ..., 200.n bzw. die jeweilige Busschnittstelle 250 ein Byte Nutzdaten in den für die entsprechende Sensorübertragungsvorrichtung 200.1, 200.2, ..., 200.n reservierten Nutzdatenblock 135 des Nutzdatenfeldes eines Busdatenpakets 100 einfügen. Diejenige Position, an der die Nutzdaten der jeweiligen Sensoreinheit USS1, USSn2, ... USSn in das Nutzdatenfeld 130 eingefügt werden dürfen, ist für jede der Sensorübertragungsvorrichtungen 200.1, 200.2, ..., 200.n in einem Speicher 260 abgespeichert. Anstelle einer direkten Information über die Position im Nutzdatenfeld kann in einem Ausführungsbeispiel im Speicher eine Aktionsliste abgelegt sein, wobei sich aus der Aktionsliste eine Zuordnungsvorschrift bestimmen lässt. Die Busschnittstelle 250 jeder Sensorübertragungsvorrichtung 200.1, 200.2, ..., 200.n ruft somit zunächst aus dem ihr zugehörigen Speicher 260 die dort gespeicherte Positionsinformation ab, bzw. bestimmt aus der im Speicher abgelegten Aktionsliste eine Zuordnungsvorschrift, wobei sich aus der Zuordnungsvorschrift die Positionsinformation ergibt, und fügt zumindest einen Teil der Nutzdaten des entsprechenden Sensors 230 in dem durch die Positionsinformation definierten Nutzdatenblock 135 ein. Auf diese Weise lässt sich ein Busdatenpaket 100 erzeugen, das für die Bussteuervorrichtung 210 so aussieht, als ob es von einer einzigen Einheit stammt. Die Sensoreinheiten USS1, USS2, ... USSn werden somit als "virtueller Sensor" zusammengeschaltet. In der Bussteuervorrichtung 210 erfolgt die Auswertung der Nutzdaten derart, dass über eine Empfangsschnittstelle 270 die Nutzdaten in den Nutzdatenblöcken des Nutzdatenfeldes ausgelesen werden und in einer Zuordnungseinheit 280 entsprechend einer Zuordnungsvorschrift als zu den verschiedenen Sensorübertragungseinheiten 200.1, 200.2, ... 200.n gehörig interpretiert werden. Die Zuordnungsvorschrift, in der eine exklusive Reservierung von Nutzdatenblöcken des Nutzdatenfeldes für die Übertragung der Nutzdaten der unterschiedlichen Sensorübertragungsvorrichtungen 200.1, 200.2, ... 200.n an die Bussteuervorrichtung 210 abgelegt ist, kann dabei aus einem entsprechenden Speicher 290 entnommen werden.

Durch das vorstehend genannte Ausführungsbeispiel der Erfindung werden somit die einzelnen Sensoreinheiten bzw. die Sensorübertragungsvorrichtungen zu einer abhängigen und gesteuerten "virtuellen Einheit", d. h. einem virtuellen "Slave" oder einem "Virtual Device" zusammengeschaltet, welche aus bis zu 8 einzelnen "Slaves" (d. h. einzelnen Sensoreinheiten) zusammengesetzt sein kann. Jeder "Slave" kann in jedem Messdatenpaket 100 ein Byte an einer genau definierten Stelle einfüllen. Diese genau definierte Stelle in dem Messdatenpaket (Nutzdatenfeld) wird über eine Sensor-Identifikation definiert, die in jeder Sensoreinheit bzw. jede Sensorübertragungsvorrichtung 100 in einem Speicher gespeichert ist.

Die Länge des Sensordatenfeldes kann bei jedem Messdatenpaket 100 unterschiedlich lang sein, wobei sich die Länge aus der unter Verwendung einer Aktionsliste bestimmten Zuordnungsvorschrift ergibt.

Fig. 3 zeigt eine grafische Darstellung einer Zuordnungsvorschrift 300 eines weiteren Ausführungsbeispiels gemäß des erfindungsgemäßen Verfahrens. Die Zuordnungsvorschrift wird erstellt unter Verwendung einer Aktionsliste 305. Mit einem Datenbus 310 sind Sensorübertragungsvorrichtungen 320.1, 320.2, 320.3, 320.4, 320.5 und 320.6 verbunden sowie eine Bussteuervorrichtung 330. Über eine in einem Speicher hinterlegte Aktionsliste 305 ergibt sich die Zuordnungsvorschrift 300. So kann in einem Ausführungsbeispiel die Aktionsliste 305 Daten von der Sensorübertragungsvorrichtung 320.1 und von der Sensorübertragungsvorrichtung 320.6 anfordern. Die dem gewählten Beispiel senden die Sensorübertragungsvorrichtungen 320.2, 320.3, 320.4, und 320.5 keine Daten. Hieraus ergibt sich eine Zuordnungsvorschrift 300, dass die Bussteuervorrichtung für ein Busdatenpaket 100 die Frame-ID, beziehungsweise die Signalisierungsdaten 110 sendet, und dass in dem anschließenden Nutzdatenfeld der erste Nutzdatenblock Nutzdaten der Sensorübertragungsvorrichtung 320.1 und der zweite Nutzdatenblock im Nutzdatenfeld des Busdatenpakets 100 Nutzdaten der Sensorübertragungsvorrichtung 320.6 enthält. Die weiteren Sensorübertragungsvorrichtungen 320.2, 320.3, 320.4, und 320.5 senden keine Daten und belegen keine Nutzdatenblöcke im Busdatenpaket 100.

In dem in Fig. 3 dargestellten Ausführungsbeispiel des erfindungsgemäßen Verfahrens wird der Vorteil eines kürzeren Busdatenpakets 100 gegenüber des in DE102009027201A1 gezeigten Verfahrens deutlich, da es nicht erforderlich ist, Leerbytes zu übertragen oder alternativ es nicht erforderlich ist, die beiden Nutzdatenblöcke auf zwei Busdatenpakete 100 aufzuteilen.

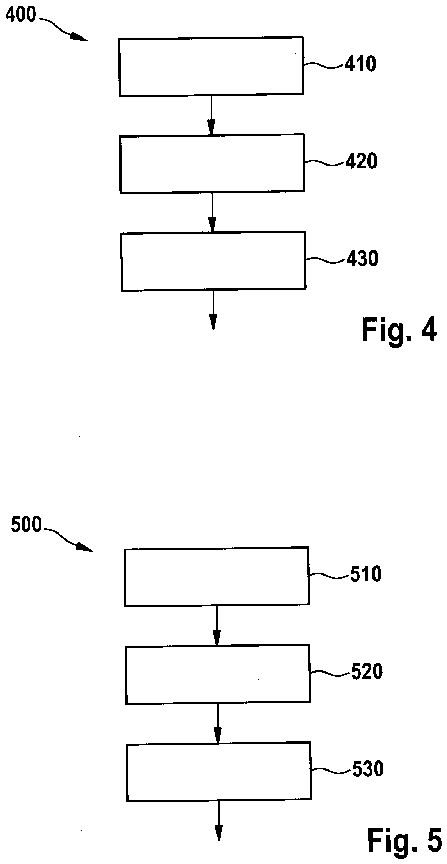

Fig. 4 zeigt ein Ablaufdiagramm eines Verfahrens 400 zur Übertragung von Nutzdaten von einer Mehrzahl von Sensoren an eine Bussteuervorrichtung für ein Fahrzeug gemäß einem Ausführungsbeispiel der vorliegenden Erfindung. Das Verfahren umfasst einen Schritt 410 des Einlesens, einen Schritt 420 des Bestimmens und einen Schritt 430 des Interpretierens. In einem Ausführungsbeispiel folgt der Schritt 420 des Bestimmens auf den Schritt 410 des Einlesens. Der Schritt 430 des Interpretierens folgt auf den Schritt 420 des Bestimmens. In einem weiteren hier nicht dargestellten Ausführungsbeispiel der vorliegenden Erfindung werden der Schritt 410 des Einlesens und der Schritt 420 des Bestimmens parallel ausgeführt und gefolgt vom Schritt 430 des Interpretierens. Der Schritt 430 des Interpretierens beinhaltet einen Teilschritt des Zuordnens.

Im Schritt 410 des Einlesens wird von der Bussteuervorrichtung ein Busdatenpaket eingelesen. Im Schritt 420 des Bestimmens wird eine Zuordnungsvorschrift für die Sensorübertragungsvorrichtungen auf die Nutzdatenblöcke im Nutzdatenfeld des Busdatenpakets bestimmt. Hierzu wird aus einer Aktionsliste der Betriebszustand für alle Sensorübertragungsvorrichtungen bestimmt, die Sensorübertragungsvorrichtungen selektiert, die Nutzdaten zu übertragen haben und diese Sensorübertragungsvorrichtungen werden in eine definierte Reihenfolge gebracht; die Nutzdatenübertragenden Sensorübertragungsvorrichtungen werden den Nutzdatenblöcken im Nutzdatenfeld eines Busdatenpakets zugeordnet. Aus der Zuordnungsvorschrift ergibt sich über die Anzahl der Nutzdatenblöcke die Länge des Nutzdatenfelds. Im Schritt 430 des Interpretierens wird das im Schritt 410 des Einlesens eingelesene Busdatenpaket derart interpretiert, dass die in den Busdatenblöcken übertragenen Nutzdaten, welche ein Sensorsignal repräsentieren, den Sensorübertragungsvorrichtungen zugeordnet werden. Die im Schritt 420 des Bestimmens verwendete Aktionsliste kann beispielsweise von Beginn an zur Verfügung stehen oder alternativ in einem nicht dargestellten Schritt des Initialisierens zur Verfügung gestellt werden. Dabei kann der Schritt des Initialisierens in der Bussteuervorrichtung die Aktionsliste empfangen und gleichzeitig oder alternativ die Aktionsliste über den Datenbus den Sensorübertragungsvorrichtungen zur Verfügung stellen. In einem weiteren nicht gezeigten Ausführungsbeispiel der vorliegenden Erfindung kann die Aktionsliste im laufenden Betrieb aktualisiert oder ausgetauscht werden.

Fig. 5 zeigt ein Ablaufdiagramm eines Verfahrens 500 zur Übertragung von Nutzdaten von einer Mehrzahl von Sensoren an eine Bussteuervorrichtung für ein Fahrzeug gemäß einem Ausführungsbeispiel der vorliegenden Erfindung. Das Verfahren umfasst einen Schritt 510 des Beziehens, einen Schritt 520 des Ermittelns und einen Schritt 530 des Empfangens. In einem Ausführungsbeispiel folgt der Schritt 520 des Ermittelns auf den Schritt 510 des Beziehens. Der Schritt 530 des Empfangens folgt auf den Schritt 520 des Ermittelns. In einem weiteren hier nicht dargestellten Ausführungsbeispiel der vorliegenden Erfindung werden der Schritt 510 des Beziehens und der Schritt 520 des Ermittelns parallel ausgeführt und gefolgt vom Schritt 530 des Empfangens. Der Schritt 530 des Empfangens beinhaltet einen Teilschritt des Anordnens.

Im Schritt 510 des Beziehens bezieht die Sensorübertragungsvorrichtung Nutzdaten von einem Sensor, wobei die Nutzdaten eine von dem Sensor gemessene Größe repräsentieren. Im Schritt 520 des Ermittelns wird eine Zuordnungsvorschrift unter Verwendung einer Aktionsliste ermittelt. Die Aktionsliste gibt einen Betriebszustand von mehreren möglichen Betriebszuständen für jede Sensorübertragungsvorrichtung vor. Mittels der Information in der Aktionsliste wird im Schritt 520 des Ermittelns die Positionsinformation für den Nutzdatenblock für die jeweilige Sensorübertragungsvorrichtung bestimmt. Hierzu wird aus einer Aktionsliste der Betriebszustand für alle Sensorübertragungsvorrichtungen bestimmt, die Sensorübertragungsvorrichtungen selektiert, die Nutzdaten zu übertragen haben und diese Sensorübertragungsvorrichtungen werden in eine definierte Reihenfolge gebracht. Im Schritt 530 des Empfangens werden von der Sensorübertragungsvorrichtung vorbestimmte Signalisierungsdaten im Signalisierungsfeld eines Busdatenpakets empfangen und darauf die im Schritt 510 des Beziehens eingelesenen Nutzdaten des Sensors in den im Schritt 520 ermittelten Nutzdatenblock im Busdatenpaket angeordnet. In einem weiteren Ausführungsbeispiel erfolgt die Aktionsauswahl und Ermittlung der Positionsinformation für den Busdatenblock nicht über eine Aktionsliste, sondern die Zuordnungsvorschrift ergibt sich direkt aus den Signalisierungsdaten im Signalisierungsfeld. Die im Schritt 520 des Ermittelns verwendete Aktionsliste kann beispielsweise von Beginn an zur Verfügung stehen oder alternativ in einem nicht dargestellten Schritt des Initialisierens zur Verfügung gestellt werden. Dabei kann im Schritt des Initialisierens in der Sensorübertragungsvorrichtung die Aktionsliste empfangen werden. In einem weiteren nicht gezeigten Ausführungsbeispiel der vorliegenden Erfindung kann die Aktionsliste im laufenden Betrieb aktualisiert oder ausgetauscht werden. Die Auswahl einer Aktion aus der Aktionsliste im Schritt 520 des Ermittelns kann über einen über den Datenbus gesendeten Auswahlbefehl erfolgen und gleichzeitig oder alternativ über vorbestimmte Signalisierungsdaten im Signalisierungsfeld eines Busdatenpakets.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zum Zuordnen von Nutzdaten aus Nutzdatenblöcken (120) eines Busdatenpakets (100) zu verschiedenen Sensorübertragungsvorrichtungen (200.x), wobei eine Bussteuervorrichtung (210) mit einem Datenbus (220) eines Fahrzeugs verbunden ist, der zur Übertragung von Busdatenpaketen (100) zwischen einer Mehrzahl von Sensorübertragungsvorrichtungen (200.x) und der Bussteuervorrichtung (210) ausgebildet ist, wobei die Busdatenpakete (100) zumindest ein Signalisierungsfeld (110) und das Nutzdatenfeld (140) mit zumindest zwei Nutzdatenblöcken (120) umfassen, wobei in ein Nutzdatenfeld (140) eines einzigen Busdatenpakets (100) die von mehreren Sensoren stammenden Nutzdaten integrierbar sind und wobei das Verfahren (400) die folgenden Schritte aufweist:
Einlesen (410) eines Busdatenpakets (100);
Bestimmen (420) einer Zuordnungsvorschrift (300) auf Basis einer Aktionsliste (305), wobei die Aktionsliste (305) mehrere Kombinationen von je einem von mehreren möglichen Betriebszuständen für jede den' Datenbus (220) nutzende Sensorübertragungsvorrichtung (200.x) enthält, wobei die Zuordnungsvorschrift (300) einen Zusammenhang zwischen einer Länge des Nutzdatenfeldes (140) und dem aktuellen Betriebszustand jeder der Sensorübertragungsvorrichtungen (200.x) repräsentiert; und
Interpretieren (430) der Nutzdaten des Busdatenpakets (100) und Zuordnen der Nutzdaten der Nutzdatenblöcke (120) zu den verschiedenen Sensorübertragungsvorrichtungen (200.x), wobei im Schritt des Interpretierens und Zuordnens (430) berücksichtigt wird, dass das Nutzdatenfeld (140) für unterschiedliche Kombinationen der Betriebszustände der Sensorübertragungsvorrichtungen (200.x) entsprechend der Zuordnungsvorschrift (300) eine unterschiedliche Länge aufweist.

2. Verfahren (500) zur Anordnung von Nutzdaten in einem Nutzdatenblock (120) eines Busdatenpakets (100) zur Übertragung der Nutzdaten von einer Sensorübertragungsvorrichtung (200.x) zu einer Bussteuervorrichtung (210) unter Verwendung eines Datenbusses (220), der zur Übertragung von Busdatenpaketen (100) zwischen einer Mehrzahl von Sensorübertragungsvorrichtungen (200.x) und der Bussteuervorrichtung (210) ausgebildet ist, wobei die Busdatenpakete (100) zumindest ein Signalisierungsfeld (110) und ein Nutzdatenfeld (140) mit zumindest einem Nutzdatenblock (120) umfassen und wobei in ein Nutzdatenfeld (140) eines einzigen Busdatenpakets (100) die von mehreren Sensoren stammende Nutzdaten integrierbar sind und wobei das Verfahren (500) folgende Schritte aufweist:
Beziehen (510) von Nutzdaten von einem Sensor, wobei die Nutzdaten eine von dem Sensor gemessene physikalische Größe repräsentieren;
Ermitteln (520) einer Zuordnungsvorschrift (300) auf Basis einer Aktionsliste (305), wobei die Aktionsliste (305) mehrere Kombinationen von je einem von mehreren möglichen Betriebszuständen für jede den Datenbus (220) nutzende Sensorübertragungsvorrichtung (200.x) enthält und wobei in Abhängigkeit von der ermittelten Zuordnungsvorschrift (300) über die Anzahl der Nutzdatenblöcke die Länge des Nutzdatenfeldes (140) ermittelt wird und wobei in Abhängigkeit von der ermittelten Zuordnungsvorschrift (300) und einem aktuellen Betriebszustand der Sensorübertragungsvorrichtung (200.x) eine von mehreren unterschiedlichen Positionen des Nutzdatenblocks (120) im Nutzdatenfeld (140) ermittelt wird; und
Empfangen (530) von vorbestimmten Signalisierungsdaten in dem Signalisierungsfeld (110) des Busdatenpaketes (100) und hierauf ansprechendes Anordnen zumindest eines Teils der von dem Sensor bezogenen Nutzdaten in dem zumindest einen durch die Zuordnungsvorschrift (300) für die Sensorübertragungsvorrichtung (200.x) spezifizierten Nutzdatenblock (120).

3. Verfahren (400; 500) gemäß einem der vorangegangenen Ansprüche, **dadurch gekennzeichnet, dass** im Schritt (420) des Bestimmens oder im Schritt (520) des Ermittelns die Anordnung einer Mehrzahl von Nutzdatenblöcken (120) in einem Nutzdatenfeld (140) in Kenntnis vom aktuellen Betriebszustand aller den Datenbus (220) nutzenden Sensorübertragungsvorrichtungen (200.x) ermittelt wird.

4. Verfahren gemäß einem der vorangegangenen Ansprüche, **dadurch gekennzeichnet, dass** in einem Schritt des Initialisierens die Aktionsliste (305) ausgesandt und/oder empfangen und/oder aktualisiert wird.

5. Verfahren gemäß einem der vorangegangenen Ansprüche, **dadurch gekennzeichnet, dass** im Schritt des Bestimmens (420) oder Ermittelns (520) die Zuordnungsvorschrift (300) auf Basis der Aktionsliste (305) unter Verwendung der von der Bussteuervorrichtung (210) in das Signalisierungsfeld (110) eines Busdatenpakets (100) geschriebenen Signalisierungsdaten bestimmt oder ermittelt wird.

6. Verfahren gemäß einem der vorangegangenen Ansprüche in Rückbezug auf Anspruch 2, **dadurch gekennzeichnet, dass** im Schritt (520) des Ermittelns die Ausführung einer aus der Aktionsliste (305) ausgewählten Aktion in der Sensorübertragungsvorrichtung (200.x) anhand der von der Bussteuervorrichtung (210) in das Signalisierungsfeld (110) eines Busdatenpakets (100) geschriebenen Signalisierungsdaten erfolgt.

7. Verfahren gemäß einem der vorangegangenen Ansprüche in Rückbezug auf Anspruch 1, **gekennzeichnet, durch** einen Schritt des Sendens eines Auswahlbefehls von der Bussteuervorrichtung (210) an eine erste und eine zumindest zweite Sensorübertragungsvorrichtung (200.x), wobei der Auswahlbefehl die Ausführung einer aus der Aktionsliste (305) ausgewählten ersten Aktion in der ersten Sensorübertragungsvorrichtung (200.x) und einer aus der Aktionsliste (305) ausgewählten zweiten Aktion in der zumindest zweiten Sensorübertragungsvorrichtung (200.x) bewirkt.

8. Sensorübertragungsvorrichtung (200.x), die Einrichtungen aufweist, die ausgebildet sind, um die Schritte eines Verfahrens (500) gemäß einem der Ansprüche 2 bis 7 durchzuführen.

9. Bussteuerungsvorrichtung (210), die Einrichtungen aufweist, die ausgebildet sind, die Schritte eines Verfahrens (400) gemäß einem der Ansprüche 1, oder 3 bis 7 durchzuführen.

10. Computer-Programmprodukt mit Programmcode zur Durchführung des Verfahrens nach einem der Ansprüche 1 oder 3 bis 8, wenn das Programm auf einer Vorrichtung ausgeführt wird.

## Claims

1. Method (400) for assigning useful data from useful data blocks (120) of a bus data packet (100) to different sensor transmission apparatuses (200.x), a bus control apparatus (210) being connected to a data bus (220) of a vehicle, which data bus is designed to transmit bus data packets (100) between a plurality of sensor transmission apparatuses (200.x) and the bus control apparatus (210), the bus data packets (100) comprising at least one signalling field (110) and the useful data field (140) with at least two useful data blocks (120), the useful data from a plurality of sensors being able to be integrated in a useful data field (140) of a single bus data packet (100), and the method (400) having the following steps of:
reading in (410) a bus data packet (100);
determining (420) an assignment rule (300) on the basis of an action list (305), the action list (305) containing a plurality of combinations of one of a plurality of possible operating states for each sensor transmission apparatus (200.x) using the data bus (220), the assignment rule (300) representing a relationship between a length of the useful data field (140) and the current operating state of each of the sensor transmission apparatuses (200.x); and
interpreting (430) the useful data in the bus data packet (100) and assigning the useful data in the useful data blocks (120) to the different sensor transmission apparatuses (200.x), the interpreting and assigning step (430) taking into account the fact that the useful data field (140) has a different length for different combinations of the operating states of the sensor transmission apparatuses (200.x) according to the assignment rule (300).

2. Method (500) for arranging useful data in a useful data block (120) of a bus data packet (100) for transmitting the useful data from a sensor transmission apparatus (200.x) to a bus control apparatus (210) using a data bus (220) which is designed to transmit bus data packets (100) between a plurality of sensor transmission apparatuses (200.x) and the bus control apparatus (210), the bus data packets (100) comprising at least one signalling field (110) and a useful data field (140) with at least one useful data block (120), and the useful data from a plurality of sensors being able to be integrated in a useful data field (140) of a single bus data packet (100), and the method (500) having the following steps of:
obtaining (510) useful data from a sensor, the useful data representing a physical variable measured by the sensor;
ascertaining (520) an assignment rule (300) on the basis of an action list (305), the action list (305) containing a plurality of combinations of one of a plurality of possible operating states for each sensor transmission apparatus (200.x) using the data bus (220), and the length of the useful data field (140) being ascertained on the basis of the ascertained assignment rule (300) via the number of useful data blocks, and one of a plurality of different positions of the useful data block (120) in the useful data field (140) being ascertained on the basis of the ascertained assignment rule (300) and a current operating state of the sensor transmission apparatus (200.x); and
receiving (530) predetermined signalling data in the signalling field (110) of the bus data packet (100) and, in response to this, arranging at least some of the useful data obtained from the sensor in the at least one useful data block (120) specified by the assignment rule (300) for the sensor transmission apparatus (200.x).

3. Method (400; 500) according to one of the preceding claims, **characterized in that**, in the determining step (420) or in the ascertaining step (520), the arrangement of a plurality of useful data blocks (120) in a useful data field (140) is ascertained with knowledge of the current operating state of all sensor transmission apparatuses (200.x) using the data bus (220).

4. Method according to one of the preceding claims, **characterized in that** the action list (305) is emitted and/or received and/or updated in an initializing step.

5. Method according to one of the preceding claims, **characterized in that**, in the determining step (420) or ascertaining step (520), the assignment rule (300) is determined or ascertained on the basis of the action list (305) using the signalling data written to the signalling field (110) of a bus data packet (100) by the bus control apparatus (210).

6. Method according to one of the preceding claims with reference back to Claim 2, **characterized in that**, in the ascertaining step (520), an action selected from the action list (305) is executed in the sensor transmission apparatus (200.x) on the basis of the signalling data written to the signalling field (110) of a bus data packet (100) by the bus control apparatus (210).

7. Method according to one of the preceding claims with reference back to Claim 1, **characterized by** a step of transmitting a selection command from the bus control apparatus (210) to a first sensor transmission apparatus and to an at least second sensor transmission apparatus (200.x), the selection command causing a first action selected from the action list (305) to be executed in the first sensor transmission apparatus (200.x) and causing a second action selected from the action list (305) to be executed in the at least second sensor transmission apparatus (200.x).

8. Sensor transmission apparatus (200.x) having devices which are designed to carry out the steps of a method (500) according to one of Claims 2 to 7.

9. Bus control apparatus (210) having devices which are designed to carry out the steps of a method (400) according to one of Claims 1 or 3 to 7.

10. Computer program product having program code for carrying out the method according to one of Claims 1 or 3 to 8 when the program is executed on an apparatus.

## Revendications

1. Procédé (400) d'affectation de données utiles issues de blocs de données utiles (120) d'un paquet de données de bus (100) à différents dispositifs de transmission de capteurs (200.x), dans lequel un dispositif de commande de bus (210) est relié à un bus de données (220) d'un véhicule, configuré pour transmettre des paquets de données de bus (100) entre une pluralité de dispositifs de transmission de capteurs (200.x) et le dispositif de commande de bus (210), dans lequel les paquets de données de bus (100) comprennent au moins un champ de signalisation (110) et le champ de données utiles (140) comportant au moins deux blocs de données utiles (120), dans lequel les données utiles issues de plusieurs capteurs peuvent être intégrées à un champ de données utiles (140) d'un paquet de données de bus (100) unique et dans lequel le procédé (400) comprend les étapes consistant à :
lire en entrée (410) un paquet de données de bus (100) ;
déterminer (420) une instruction d'affectation (300) sur la base d'une liste d'actions (305), dans lequel la liste d'actions (305) contient plusieurs combinaisons chacune constituée de plusieurs états de fonctionnement possibles pour chaque dispositif de transmission de capteur (200.x) utilisant le bus de données (220), dans lequel l'instruction d'affectation (300) représente une relation entre une longueur du champ de données utiles (140) et l'état de fonctionnement instantané de chacun des dispositifs de transmission de capteurs (200.x) ; et
interpréter (430) les données utiles du paquet de données de bus (100) et affecter les données utiles des blocs de données utiles (120) aux différents dispositifs de transmission de capteurs (200.x), dans lequel, lors de l'étape d'interprétation et d'affectation (430), il est tenu compte du fait que le champ de données utiles (140) présente une longueur différente pour des combinaisons différentes des états de fonctionnement des dispositifs de transmission de capteurs (200.x), d'une manière qui correspond à l'instruction d'affectation (300).

2. Procédé (500) d'affectation de données utiles dans un bloc de données utiles (120) d'un paquet de données de bus (100) pour transmettre les données utiles d'un dispositif de transmission de capteur (200.x) à un dispositif de commande de bus (210) en utilisant un bus de données (220) configuré pour transmettre des paquets de données de bus (100) entre une pluralité de dispositifs de transmission de capteurs (200.x) et le dispositif de commande de bus (210), dans lequel les paquets de données de bus (100) comprennent au moins un champ de signalisation (110) et un champ de données utiles (140) ayant au moins un bloc de données utiles (120) et dans lequel les données utiles issues de plusieurs capteurs peuvent être intégrées à un champ de données utiles (140) d'un paquet de données de bus (100) unique et dans lequel le procédé (500) comprend les étapes consistant à :
obtenir (510) des données utiles d'un capteur, dans lequel les données utiles représentent une grandeur physique mesurée par le capteur ;
établir (520) une instruction d'affectation (300) sur la base d'une liste d'actions (305), dans lequel la liste d'actions (305) contient plusieurs combinaisons chacune constituée de l'un de plusieurs états de fonctionnement possibles pour chaque dispositif de transmission de capteur (200.x) utilisant le bus de données (220) et dans lequel la longueur du champ de données utiles (140) est déterminée en fonction de l'instruction d'affectation (300) déterminée sur le nombre des blocs de données utiles et dans lequel l'une de plusieurs positions différentes du bloc de données utiles (120) dans le champ de données utiles (140) est déterminée en fonction de l'instruction d'affectation déterminée (300) et d'un état de fonctionnement instantané du dispositif de transmission de capteur (200.x) ; et
recevoir (530) des données de signalisation prédéterminées dans le champ de signalisation (110) du paquet de données de bus (100) et agencer en réponse à cela au moins une partie des données utiles obtenues par le capteur dans au moins un bloc de données utiles (120) spécifié par l'instruction d'affectation (300) pour le dispositif de transmission de capteur (200.x).

3. Procédé (400 ; 500) selon l'une quelconque des revendications précédentes, **caractérisé en ce que**, lors de l'étape (420) de détermination ou lors de l'étape (520) d'établissement, l'agencement d'une pluralité de blocs de données utiles (120) dans un champ de données utiles (140) est déterminé en tenant compte de l'état de fonctionnement instantané de tous les dispositifs de transmission de capteurs (200.x) utilisant le bus de données (220).

4. Procédé selon l'une quelconque des revendications précédentes, **caractérisé en ce que**, lors d'une étape d'initialisation, la liste d'actions (305) est émise et/ou reçue et/ou actualisée.

5. Procédé selon l'une quelconque des revendications précédentes, **caractérisé en ce que**, lors de l'étape de détermination (420) ou d'établissement (520), l'instruction d'affectation (300) est déterminée ou établie sur la base de la liste d'actions (305) par utilisation des données de signalisation écrites par le dispositif de commande de bus (210) dans le champ de signalisation (110) d'un paquet de données de bus (100).

6. Procédé selon l'une quelconque des revendications précédentes se référant à la revendication 2, **caractérisé en ce que**, lors de l'étape (520) d'établissement, l'exécution d'une action sélectionnée dans la liste d'actions (305) dans le dispositif de transmission de capteur (200.x) est effectuée sur la base des données de signalisation écrites par le dispositif de commande de bus (210) dans le champ de signalisation (110) d'un paquet de données de bus (100).

7. Procédé selon l'une quelconque des revendications précédentes se référant à la revendication 1, **caractérisé par** une étape consistant à émettre un ordre de sélection du dispositif de commande de bus (210) vers un premier et à au moins un second dispositif de transmission de capteur (200.x), dans lequel l'ordre de sélection provoque l'exécution d'une première action sélectionnée dans la liste d'actions (305) dans le premier dispositif de transmission de capteur (200.x) et d'une seconde action sélectionnée dans la liste d'actions (305) dans l'au moins second dispositif de transmission de capteur (200.x).

8. Dispositif de transmission de capteur (200.x) comprenant des moyens configurés pour mettre en oeuvre les étapes d'un procédé (500) selon l'une quelconque des revendications 2 à 7.

9. Dispositif de commande de bus (210) comprenant des moyens configurés pour mettre en oeuvre les étapes d'un procédé (400) selon l'une quelconque des revendications 1, ou 3 à 7.

10. Produit de programme informatique comportant un code de programme destinés à mettre en oeuvre le procédé selon l'une quelconque des revendications 1, ou 3 à 8 lorsque le programme est exécuté sur un dispositif.
